# EUROPEAN PATENT SPECIFICATION

(11) **EP 2 160 915 B1**
(45) Date of publication and mention of the grant of the patent: **10.08.2011**
(21) Application number: 07835899.1
(22) Date of filing: 27.06.2007
(51) Int. Cl.: H04Q 1/00

(54) **AUTOMATIC CONTACT INFORMATION ENTRY VIA LOCATION SENSING**
AUTOMATISCHER KONTAKTINFORMATIONSEINTRAG MITTELS STANDORTBESTIMMUNG
ENTRÉE AUTOMATIQUE D'INFORMATIONS DE CONTACT PAR DÉTECTION DE POSITION

(43) Date of publication of application: 10.03.2010
(73) Proprietor: Thomson Licensing, 92130 Issy-les-Moulineaux (FR)
(72) Inventor: MEARS, Mark, Gilmore, Zionsville, Indiana 46077 (US)
(74) Representative: Ruellan-Lemonnier, Brigitte
(86) International application number: PCT/US2007/014960
(87) International publication number: WO 2009/002312

(56) References cited:
- EP-A- 1 211 906
- US-A1- 2004 203 746
- US-A1- 2007 121 911

## Description

### FIELD OF TECHNOLOGY

The present invention relates to mobile communication devices. More particularly, it relates to the automatic entry of contact information for a mobile communication device.

### BACKGROUND OF THE INVENTION

When using a mobile device, the entering of all your friends, family and business information into the device can be boring, tedious and slow. For example, when using a "cell phone entry method", the user may have press the "7" key four times just to get the letter "S" to appear. For a personal digital assistant (PDA), the stylus is pecked at a screen one character at a time.

Other manual entry methods for a users contact list are also available and usually require the input of data directly by the user in one form or another (e.g., by typing, writing, using text message keys on a mobile device, etc.) which may either be difficult because of the size of the input means or time consuming.
US 2004/203746 discloses a method wherein the mobiles location is determined, a server is informed which provides contact information for the new area. When the terminal leaves the area, the contacts are deleted from the terminal.

### SUMMARY OF THE INVENTION

It is therefore an aspect of the present principles to provide a method for the automatic phone and address contact information entry into a mobile device, such as, for example a cell phone or PDA.

This and other aspect are achieved in accordance with an implementation of the present principles wherein the method for entering contact information into a mobile computing device includes selecting an auto fill mode of operation for the mobile device, determining the location of the mobile device, matching the mobile device location to information relating to at least one contact from a database corresponding to the device location, sending the information relating to at least one contact possibility to the mobile device, and requesting user action in response to the information relating to the at least one contact possibility received at the mobile device.

The requesting of user action can include, for example, determining whether multiple contact possibilities exist for the determined location of the mobile device, displaying a list of multiple contact possibilities to the user when more than one contact possibility exists, and requesting user input to select one or none of the multiple contact possibilities.

In order to determine the location of the mobile device, various methods can be implemented. For example, the mobile device location can be obtained using tower triangulation techniques, or alternatively, utilizing a GPS receiver built into the mobile device.

When using the GPS of the mobile device, the location determination can include, obtaining GPS coordinates from the built in GPS receiver, determining whether contact information is stored for the obtained coordinates, and sending the GPS coordinates to a network provider when no contact information is stored for the obtained coordinates.

When contact information is stored for the obtained coordinates, the user is informed accordingly, and the GPS coordinates are sent to a network provider when the user selects to proceed regardless of the stored contact information.

Other aspects and features of the present principles will become apparent from the following detailed description considered in conjunction with the accompanying drawings. It is to be understood, however, that the drawings are designed solely for purposes of illustration and not as a definition of the limits of the present principles, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings wherein like reference numerals denote similar components throughout the views:

Figure 1 is flow diagram of the method for automatic contact information entry according to an implementation of the present principles;

Figure 2 is a flow diagram of the method for automatic contact information entry according to another implementation of the present principles; and

Figure 3 shows a block diagram of a mobile computing device according to an implementation of the present principles.

### DETAILED DESCRIPTION

It is a common feature for cell phones or other mobile computing devices to have the ability to sense its location via cell phone tower triangulation. This is the case, at a minimum, for 911 emergency services, but also for more enhanced service offerings like pulling or pushing information regarding businesses in the immediate area. More advanced cell phones and mobile computing devices have global positioning system (GPS) receiver built in or integrated therewith.

In accordance with one implementation of the present principles, rather than laboriously typing in a favorite person's or business's contact information (e.g., contact name, phone number and/or address), the user can go to the contacts feature in their personal mobile device and select "Auto-fill contact info by location". In response, the mobile device will detect its current location (e.g., either by GPS receiver built in, cell phone tower triangulation or any other method for location sensing). The location information of the mobile device (e.g., coordinates) is sent to the network provider, which correlates the location coordinates to one or more contacts identified in the user's location. The contact information can include specific names, phone numbers and/or complete addresses which are then sent to the user's mobile device.

In the event multiple entries are found for the same location (e.g., Jim Smith, 102 Main St. 317-888-2222, etc.; Jane Ryan, 103 Main St., etc; Bob Tipp, 108 Main St., etc.), each is presented to the user whereupon the user may select the "right" entry from the list, which is then stored in the user's mobile device. Any unselected options are discarded.

The display of the multiple entries to the user can take many different forms. For example, the user may be presented with either a list of names, addresses and/or phone numbers, or any combination of the same. Once stored, the user can edit the stored contact information as they desire.

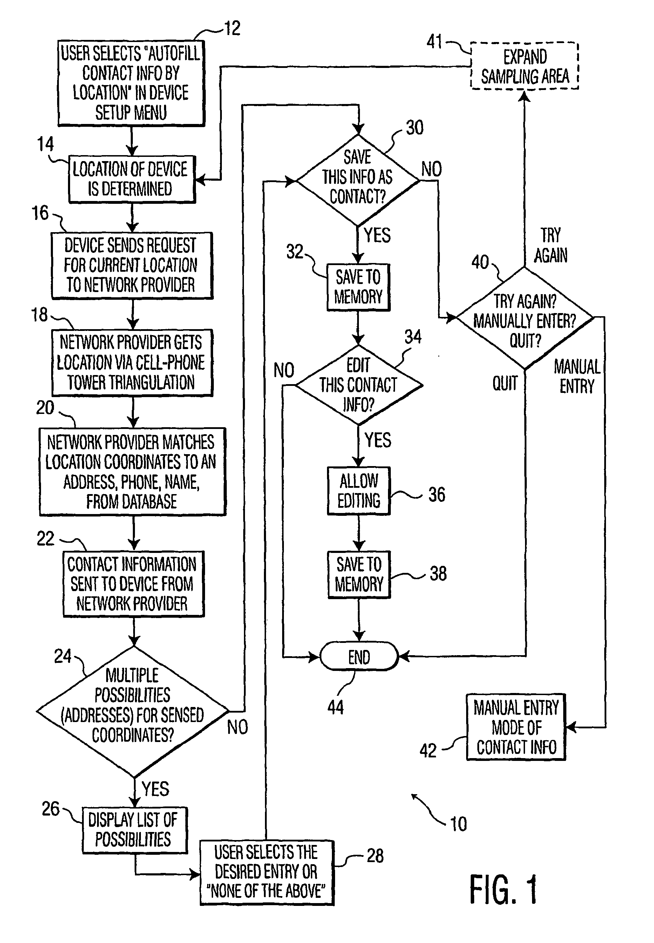

Figure 1 shows a flow diagram 10 according to an aspect of the present principles. Initially, the user selects an option 12 called "auto-fill contact by location" on their mobile device. This option may be called other things and would ordinarily be contained in the mobile device setup menu or possibly the contact menu as an option. Once the "auto-fill" option is initiated, the mobile device determines its location 14. In this embodiment, the location determination 14 is performed by the mobile device sending a request for the current location to a network provider 16, and the network provider obtaining the location using cell phone tower triangulation 18. The network provider then matches the location coordinates to an address, phone number, and/or name from a database 20. Once matched, the network provider sends the mobile device the contact information 22.

In the practice of the invention, database 20 may be a relational database available through a network such as the Internet, which contains information that maps GPS information to name, address, and other identifying information for a user. In an optional embodiment of the present invention, database 20 may be pre-selected by a user so that a database provided by a first supplier of information may be chosen over a second supplier of information. Additionally, a user may specify that once the name and address information is returned from a first database 20, that such information (or other types of personal information) is submitted to a second database 20 as a search query. That way, a user can get supplemental information (such as personal web pages or electronic logs that the person may maintain, information about their occupation, information about their spouse and children, and the like) which are not name, address, and phone information.

This concept can be expanded so that a search may be transmitted to a specific vendor to establish whether the party identified through GPS information has different items that they may want to purchase. For example, once a person's identifying information is discovered, a search query is transmitted to a database 20 to inquire about whether the identified party has anything on a wishlist or registry (such as a bridal registry) that they desire to be purchased on their behalf. The person operating the mobile device may then elect to learn about and/or purchase such items from a third party via a network connection. In the present example, a search query is automatically transmitted to Amazon (upon a user actuated command), where a user can list their various wishlist items. The user operating the mobile device then can use the services available through Amazon to purchase items for the identified party.

When providing the contact information to the user based on location, it is possible that more than one possible contact is obtained from the location information. As such, when the network provider sends the mobile device the contact information, there may be multiple possibilities sensed for those coordinates 24. When there are multiple possibilities sensed for the coordinates, the lists of possibilities are displayed 26 to the user of using an interface means such as a pop up window, or other type visual indication and the user selects the desired entry or "none of the above" at step 28. Where there are no multiple possibilities for the sensed coordinates, or the user makes a selection at step 28, a decision is presented to the user to save this contact information 30. If the user selects "yes", the contact information is saved to memory 32. At this stage the process could end without any further user input

In one implementation of the present principles, the user may be provided with the option to edit the contact info 34 when the command to save in memory 32 is executed. When the user does not select to edit the contact, the process ends 44. When the user does elect to edit the contact, editing is allowed 36, and the edited information is saved in memory 38 and the process ends.

In the event the user does not select to save the contact information at step 30, they are provided with three (3) options 40. The user may select to "try again", in which case the process starts over at step 14 and the location determination. According to one implementation, when the user selects "try again" it could be after the user moves closer to the intended address. According to yet another implementation, when the user selects "try again" as step 40, the system can expand the sampling area 41 being used for the location determination 14. By expanding the sampling area, a wider area of physical addresses (i.e., locations) is sampled in an attempt to capture the "right" address. As would be expected, the previously suggested and user-rejected locations are not offered in subsequent "try again" attempts.

The user may select "manually enter" in which case the mobile device enters a manual entry mode 42, and the user proceeds to manually enter the contact information. The last option to the user is to "quit" in which case the process ends 44.

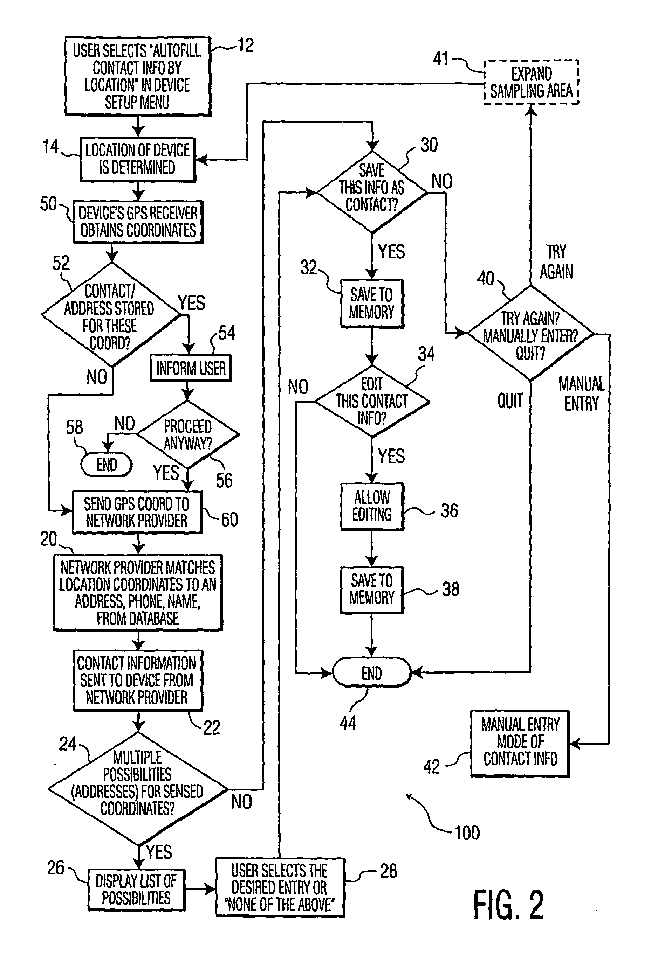

Figure 2 shows another implementation of the method 100 according to the present principles. In this implementation, the location determination steps 16 and 18 of Figure 1 are replaced with new steps 50-60. In order to determine the location of the device 14, the device utilizes its built in GPS receiver to obtain its coordinates 50. A determination is then made as to whether or not contact information is stored for these coordinates 52. If there is no contact information stored for these coordinates, the mobile device sends the GPS coordinates to the network provider 60.

When there is contact information stored for the coordinates of the mobile device, the user is informed 54 and asked whether or not to proceed anyway 56. If the user responds by saying "no" to the "proceed anyway" inquiry, the process ends 58 there. If the user responds by saying "yes" to the "proceed anyway" inquiry, the system proceeds to send the GPS coordinate information to the network provider 60.

The network provider matches the location coordinates to an address, phone number and/or name from a database. 20. The remaining steps preformed are identical to those described with reference to the implementation shown in Figure 1, and will not be repeated.

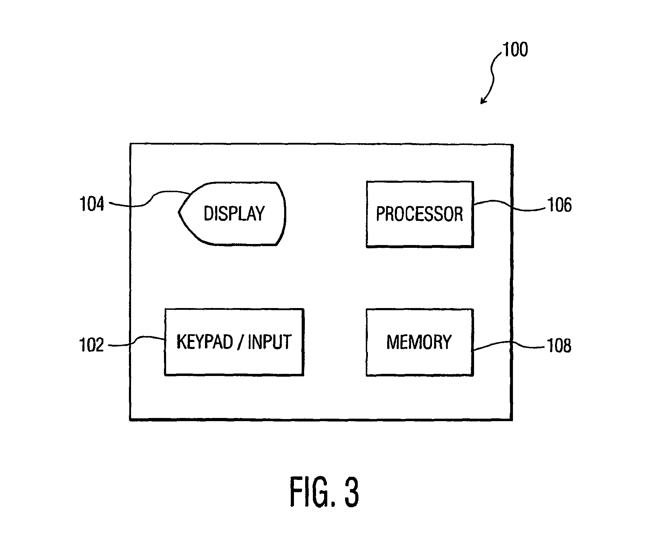

Figure 3 shows a mobile computing device 100 having a keypad or other input 102, a display 104, a processor 106 and a memory 108. The keypad/input 102 can be any known input device, such as, for example a keypad, or a stylus (as used with a PDA). In other contemplated forms, display 104 can be a touch sensitive display and thereby eliminate the need for a separate keypad/input 102. The processor 106 is configured to perform all the standard functions of the mobile device 100 and memory 108 provides a storage area for the user's contact lists, and any other data the user may store on the mobile device. Those of ordinary skill in the art will recognize that memory 108 and its functions can be expanded into multiple memory modules, or can simply be configured to retain programming to perform the method steps of the present principles. Processor 106, in conjunction with any programming stored in memory 108, is configured to perform all the required functions of the methods of the present principles.

It is to be understood that the present principles may be implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

It is to be further understood that, because some of the constituent system components and method steps depicted in the accompanying Figures are preferably implemented in software, the actual connections between the system components (or the process steps) may differ depending upon the manner in which the present principles is programmed. Given the teachings herein, one of ordinary skill in the related art will be able to contemplate these and similar implementations or configurations of the present principles.

While there have been shown, described and pointed out fundamental novel features of the present principles, it will be understood that various omissions, substitutions and changes in the form and details of the methods described and devices illustrated, and in their operation, may be made by those skilled in the art without departing from the spirit of the same. For example, it is expressly intended that all combinations of those elements and/or method steps which perform substantially the same function in substantially the same way to achieve the same results are within the scope of the present principles. Moreover, it should be recognized that structures and/or elements and/or method steps shown and/or described in connection with any disclosed form or implementation of the present principles may be incorporated in any other disclosed, described or suggested form or implementation as a general matter of design choice. It is the intention, therefore, to be limited only as indicated by the scope of the claims appended hereto.

## Claims

1. A method for entering contact information into a mobile computing device comprising the steps of:
selecting an auto fill mode of operation for the mobile device (12);
determining a location of the mobile device (14);
transmitting (18) said location information to a database for matching the mobile device location to information relating to at least one contact from a database corresponding to the device location(20) wherein said contact information pertains to said location;
receiving the information relating to at least one contact possibility to the mobile device (22); and
requesting user action in response to the information relating to the at least one contact possibility received at the mobile device (26, 28) when multiple contact possibilities are received for said location;
displaying a list of multiple contact possibilities to the user when more than one contact possibility exists; and
requesting user input to select one or none of the multiple contact possibilities for assignment for said location, **characterized by**, that in response to said input, a selected contact possibility is saved to memory so that said selected contact is associated with said location and said selected contact will be retrieved when said device determines said location again.

2. The method of claim 1, wherein said determining the location of the mobile device comprises obtaining the mobile device location using tower triangulation techniques and sending a request from the mobile device to a network provider for current location information.

3. The method of claim 1, wherein said determining the location of the mobile device comprises utilizing a built in GPS receiver.

4. The method of claim 1, wherein said requesting further comprises:
determining whether multiple contact possibilities exist for the determined location of the mobile device; and
requesting user input to save a displayed contact when there are no determined multiple contact possibilities.

5. The method of claim 3, wherein said determining the location further comprises:
obtaining GPS coordinates from the built in GPS receiver;
determining whether contact information is stored for the obtained coordinates; and
sending the GPS coordinates to a network provider when no contact information is stored for the obtained coordinates.

6. The method of claim 3, wherein said determining the location further comprises:
obtaining GPS coordinates from the built in GPS receiver;
determining whether contact information is stored for the obtained coordinates;
informing the user when there is contact information stored for the obtained coordinates; and
sending the GPS coordinates to a network provider when the user selects to proceed regardless of the stored contact information.

7. The method of claim 1, further comprising the steps of:
submitting said contact information to a second database as a search query; and
receiving additional information as a supplement to said contact information from said second database as a result of said search query.

## Patentansprüche

1. Verfahren zum Eingeben von Kontaktinformationen in eine mobile Computervorrichtung, wobei das Verfahren die folgenden Schritte umfasst:
Auswählen einer Betriebsart zum automatischen Ausfüllen für die mobile Vorrichtung (12);
Bestimmen eines Orts der mobilen Vorrichtung (14);
Senden (18) der Ortsinformationen an eine Datenbank zum Vergleichen des Orts der mobilen Vorrichtung mit Informationen in Bezug auf mindestens einen Kontakt aus einer Datenbank entsprechend dem Vorrichtungsort (20), wobei sich die Kontaktinformationen auf den Ort beziehen;
Empfangen der Informationen, die sich auf mindestens eine Kontaktmöglichkeit beziehen, bei der mobilen Vorrichtung (22); und
Anfordern einer Benutzeraktion in Reaktion auf die bei der mobilen Vorrichtung (26, 28) empfangenen Informationen, die sich auf die mindestens eine Kontaktmöglichkeit beziehen, wenn für den Ort mehrere Kontaktmöglichkeit empfangen werden;
Anzeigen einer Liste mehrerer Kontaktmöglichkeiten für den Benutzer, wenn es mehr als eine Kontaktmöglichkeit gibt; und
Anfordern einer Benutzereingabe zum Auswählen einer oder keiner der mehreren Kontaktmöglichkeiten zur Zuweisung für den Ort, **dadurch gekennzeichnet, dass** in Reaktion auf die Eingabe eine ausgewählte Kontaktmöglichkeit im Speicher gesichert wird, sodass der ausgewählte Kontakt dem Ort zugeordnet wird und der ausgewählte Kontakt wiedergewonnen wird, wenn die Vorrichtung den Ort erneut bestimmt.

2. Verfahren nach Anspruch 1, bei dem das Bestimmen des Orts der mobilen Vorrichtung das Erhalten des Orts der mobilen Vorrichtung unter Verwendung von Tower-Triangulierungstechniken und das Senden einer Anforderung von der mobilen Vorrichtung an einen Netzanbieter für gegenwärtige Ortsinformationen umfasst.

3. Verfahren nach Anspruch 1, bei dem das Bestimmen des Orts der mobilen Vorrichtung die Nutzung eines eingebauten GPS-Empfängers umfasst.

4. Verfahren nach Anspruch 1, bei dem das Anfordern ferner umfasst:
Bestimmen, ob es für den bestimmten Ort der mobilen Vorrichtung mehrere Kontaktmöglichkeiten gibt; und
Anfordern einer Benutzereingabe zum Sichern eines angezeigten Kontakts, wenn es keine bestimmten mehreren Kontaktmöglichkeiten gibt.

5. Verfahren nach Anspruch 3, bei dem das Bestimmen des Orts ferner umfasst:
Erhalten von GPS-Koordinaten von dem eingebauten GPS-Empfänger;
Bestimmen, ob Kontaktinformationen für die erhaltenen Koordinaten gespeichert sind; und
Senden der GPS-Koordinaten an einen Netzanbieter, wenn für die erhaltenen Koordinaten keine Kontaktinformationen gespeichert sind.

6. Verfahren nach Anspruch 3, bei dem das Bestimmen des Orts ferner umfasst:
Erhalten von GPS-Koordinaten von dem eingebauten GPS-Empfänger;
Bestimmen, ob Kontaktinformationen für die erhaltenen Koordinaten gespeichert sind;
Informieren des Benutzers, wenn für die erhaltenen Koordinaten Kontaktinformationen gespeichert sind; und
Senden der GPS-Koordinaten an einen Netzanbieter, wenn der Benutzer auswählt, dass unabhängig von den gespeicherten Kontaktinformationen fortgefahren werden soll.

7. Verfahren nach Anspruch 1, das ferner den folgenden Schritt umfasst:
Einreichen der Kontaktinformationen an eine zweite Datenbank als eine Suchanfrage; und
Empfangen zusätzlicher Informationen als eine Ergänzung zu den Kontaktinformationen von der zweiten Datenbank im Ergebnis der Suchanfrage.

## Revendications

1. Procédé permettant l'entrée d'informations de contact dans un équipement mobile, comprenant les étapes suivantes :
sélection d'un mode de fonctionnement de remplissage automatique pour l'équipement mobile (12) ; en déterminant une position du l'équipement mobile.
transmission (18) de ladite information de position à une base de données à des fins de correspondance entre la position de l'équipement mobile et de l'information relative à au moins un contact provenant d'une base de données correspondant à la position de l'équipement (20) et où ladite information de contact a trait à ladite position ;
réception de l'information relative à au moins une possibilité de contact sur l'équipement mobile (22) ; et
requête d'action utilisateur en réponse à l'information relative à au moins une possibilité de contact reçue sur le l'équipement mobile (26, 28) lorsque de multiples possibilités de contact sont reçues pour ladite position ;
affichage d'une liste de multiples possibilités de contacts pour l'utilisateur quand il existe plus d'une possibilité de contact, et
requête d'entrée utilisateur à des fins de sélection d'une ou d'aucune des multiples possibilités de contact pour l'affectation à ladite position, **caractérisée en ce que**, en réponse à ladite entrée, une possibilité de contact sélectionnée est sauvegardée dans la mémoire de sorte que ledit contact sélectionné est associé à ladite position et que ledit contact sélectionné est récupéré lorsque ledit l'équipement détermine à nouveau ladite position.

2. Procédé selon la revendication 1, dans lequel ladite détermination de position de l'équipement mobile comprend l'obtention de la position de l'équipement mobile par l'utilisation de la technologie de triangulation à tour et l'envoi d'une requête depuis l'équipement mobile à un fournisseur de réseau pour information de position actuelle.

3. Procédé selon la revendication 1, dans lequel ladite détermination de la position de l'équipement mobile comprend l'utilisation d'un récepteur GPS intégré.

4. Procédé selon la revendication 1, dans lequel ladite requête comprend en outre :
détermination de l'existence ou non de multiples possibilités de contact pour la position déterminée de l'équipement mobile ; et
requête d'une entrée utilisateur afin d'enregistrer un contact affiché en l'absence de multiples possibilités de contact déterminées.

5. Procédé selon la revendication 3, dans lequel ladite détermination de position comprend en outre :
obtention de coordonnées GPS depuis le récepteur GPS intégré ;
détermination de sauvegarde ou non de l'information de contact pour les coordonnées obtenues ; et
envoi des coordonnées GPS à un fournisseur de réseau lorsqu'aucune information de contact n'est stockée pour les coordonnées obtenues.

6. Procédé selon la revendication 3, dans lequel ladite détermination de position comprend en outre :
obtention de coordonnées GPS depuis le récepteur GPS intégré ;
détermination du stockage ou non des informations de contact pour les coordonnées obtenues ;
informer l'utilisateur lorsque de l'information de contact est stockée pour les coordonnées obtenues ; et
envoi des coordonnées GPS à un fournisseur de réseau lorsque l'utilisateur choisit de continuer sans tenir compte de l'information de contact stockée.

7. Procédé selon la revendication 1, comprenant en outre les étapes suivantes :
envoi de ladite information de contact à une seconde base de données en tant que requête de recherche ; et
réception d'information supplémentaire en complément de ladite information de contact provenant de ladite seconde base de données comme résultat de ladite requête de recherche.
